# EUROPEAN PATENT APPLICATION

(11) **EP 2 078 686 A1**
(43) Date of publication of application: **15.07.2009**
(21) Application number: 09150226.0
(22) Date of filing: 08.01.2009
(51) Int. Cl.: B65G 15/60, B65G 21/20

(54) **Feed arrangement**

(30) Priority: 10.01.2008 SE 0800056
(71) Applicant: Renholmens Mekaniska Verkstad AB, 930 47 Byske (SE)
(72) Inventor: Lindberg, Bertil, 934 41, Ersmark (SE); Marklund, Gunnar, 930 47, Byske (SE)
(74) Representative: Nikolopoulou, Sofia

(57) **Abstract**

The invention concerns a feed arrangement consisting of an endless transport element (1) such as a belt of elastic, a cogged band, a chain or similar that is mobile along a circuit and arranged to remove items (5) during storage or transport, in particular timber such as planks or boards, from a first position to a second position through interaction with the item. The invention is **characterised in that** an expansion body (6) has been assigned to the transport element (1), which expansion body comprises a membrane-shaped part (7) with a chamber (8) that is filled with a medium, whereby the membrane-shaped part is placed into interaction with the transport element for its inflation during the removal of the item.

## Description

The present invention concerns a feed arrangement according to the introduction to claim 1.

Feed arrangements with endless mobile transport elements such as endless belts and cogged bands are used in a number of different applications and they have in common that they are used for transport, displacement or removal of goods. It may be necessary in certain applications to displace goods that are being transported or that are located at rest from a first transporter to a second transporter. This is the case for example during the stripping of timber, in particular of boards and planks, from one location in a stack of timber to a location on a subsequent transporter. A transport element is normally used for this purpose, which element is arranged to draw timber away from the first transporter and to transfer it to the second transporter.

The area of use for feed arrangements with endless transport elements of the type described above are interesting in a number of different handling machines, not least for the type of handling machine that are used to displace timber within the timber industry. Since timber is a natural material, various types of random differences and deviations between individual pieces of timber are always present in practice. The timber may be, among other things, bent, twisted, or warped, and it may be more or less difficult to draw the timber away by means of the transport element.

Feed arrangements with endless transport elements intended to be used for the purpose described above must demonstrate a number of different properties that are often contradictory. Among other properties, the transport elements of the feed arrangement are to have high strength with respect to both tensile and compressive forces in the longitudinal and sideways directions of the element, while the elements at the same time are to demonstrate great flexibility and compliance in the direction of their height or thickness in order for it to be possible for them to adapt to any deviations in the items that are to be removed. The transport elements, furthermore, are to demonstrate great bendability and flexibility in the longitudinal direction in order to be able to rotate endlessly around two or more wheels also at small deflection radii, and such that they can simply be brought into contact by a force against the item that is to be displaced in order to achieve such a force of friction that the item can be removed by means of the transport element.

The purpose of the present invention is therefore to achieve a feed arrangement that uses endless mobile transport elements such as an endless cogged band and which feed arrangement of such a type that satisfies the requirements described above.

The said purpose of the invention is achieved through the feed arrangement being given the features and characteristics that are specified in claim 1. Other features and characteristics of the invention are made clear by the non-independent claims.

An embodiment of the invention is described in more detail below with reference to the attached drawings, where:
Figure 1 shows a side view of a feed arrangement according to the invention,
Figures 2 and 3 show cross-sections along the lines II-II and III-III, respectively, in Figure 1 for an expansion body that has been assigned to an endless mobile transport element that is a component of the feed arrangement,
Figure 4 shows a perspective view of a feed arrangement according to the invention in an alternative embodiment, and
Figure 5 shows a cross-section through an expansion body not only in a non-inflated position but also in an alternative inflated position with a dash-dot contour line.

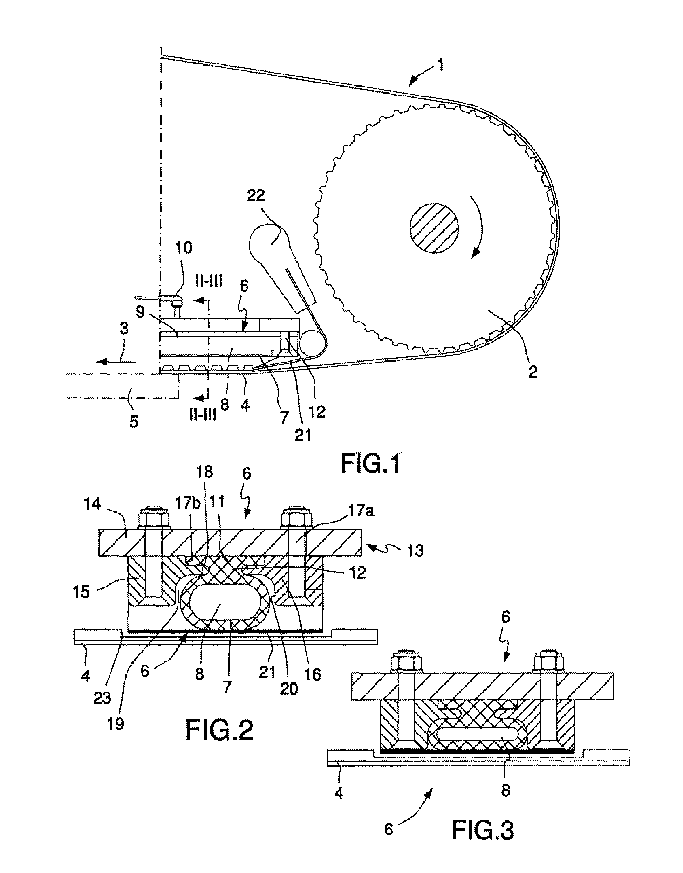

With reference to Figure 1, a part of a feed arrangement according to the invention is shown, which part has an endless mobile transport element 1, which in this case is constituted by a cogged band arranged to run in a circuit around at least two wheels, of which only one wheel 2 is shown in the drawing. The direction of motion of the transport element is shown by the arrow 3. It should be understood that it is possible that the transport element 1 be constituted by any endlessly mobile item, such as, for example, a belt of elastic, a chain, or similar. It is intended that the transport element 1 feed or remove using a peripheral outer surface of an active lower part 4 an item 5 that is suggested by a dash-dot contour line. The said item 5 is extended and it is constituted by pieces of timber such as planks or boards, but it could be constituted in practice by any item at all. The item 5 extends across the transport element 1 whereby removal of the item takes place through interaction and a manifest force of friction between the lower part 4 of the transport element 1 and the upper surface of the item. An extended expansion body 6 is arranged at the transport element 1 that comprises a membrane-shaped part 7 with a chamber 8, which can be placed in contact through a valve device 9 with a source 10 of pressure medium, such that the chamber and thus also the membrane-shaped part can be filled and held expanded with the aid of an inner pressure of a suitable medium, and shrink when the medium is evacuated. It is appropriate that the medium be constituted by pressurised air, but it is not limited to this. The expansion body 6 is essentially extended and arranged within the circuit of the transport element 1, to be more precise: it extends along the lower part 4, which is used for displacement of the item, of the transport element.

As Figures 2 and 3 make clear, the expansion body 6 demonstrates when seen in cross-section the form of an extended body produced as one piece by, for example, extrusion along a profile; this body being of an elastic material such as rubber. The said expansion body 6 demonstrates when seen in cross-section from the circuit of the central part of the transport element 1 an inner solid essentially thickened base 11, an intermediate tapered web 12, and at the farthest extremity the above-mentioned membrane-shaped part 7. The membrane-shaped part 7 has when in its inflated state an essentially bulb-shaped form. An attachment means 13 is arranged that is located within the circuit of the transport element 1 and fixes the expansion body 6 through its thickened base 11 such that the bulb-like membrane-shaped part 7 extends parallel along the inner surface of the transport element 1. As detailed study of the drawings will make clear, the membrane-shaped part 7 is located in close proximity to the inner surface of the lower part 4 of the transport element 1 in order to interact in a supporting manner with the said lower part. The attachment means 13 comprises a fixed part 14 and first 15 and second 16 parts having the form of a strip, which parts are mounted by means of screw means 17a on the fixed part in a manner that allows them to be removed. When in the mounted condition, the said parts 14, 15 and 16 form together an undercut track 17b into which the base 11 fits in such a manner that it can be absorbed into and locked in place in the track. Each strip-shaped part 11, 12 is provided with a finger-shaped protrusion 18 in order to achieve the said locking action. When in the mounted condition, the finger-shaped protrusions 18 face towards each other and extend in towards the web part 12 of the expansion body 6. The two strip-shaped parts 15, 16 form between them a channel 19 that faces down towards the inner surface of the lower part 4 of the transport element 1, the opposing walls 20 of which channel interact in a supportive manner with at least one part of the long sides of the membrane-shaped part 7.

Between the membrane-shaped part 7 and the inner surface of the lower active part 4 of the transport element 1 there extends a parallel, belt-shaped friction-reducing means 21 that offers low friction between the said parts. The friction-reducing means 21 is essentially extended and is constituted by a belt of a strip of Teflon or similar plastic material whose purpose is to separate the transport element 1 and the expansion body 6 from each other, such that the transport element 1 can rotate in interaction with the stationary expansion body 6 and pass along this with as low a friction as possible.

As is seen most clearly in Figure 1, the friction-reducing means 21 is attached at its ends by means of spring-loaded holders 22, designed such that the friction-reducing means is offered a certain degree of compliance and the possibility to move outwards in the direction towards the lower active part 4 of the transport element 1 as a response to the expansion that the expansion body 6 undergoes when it is inflated. The transport element 1 is guided by tracks relative to the expansion body 6 such that these parts always are to be located in line, opposite each other. The transport element 1 is for this purpose provided with a groove 23, produced by milling or by another suitable means, in the inner surface of the transport element that faces the centre of the circuit, in which groove the friction-reducing means 21 is so accommodated that the transport element is held guided in line with the expansion body 6. The said milling operation forms at the same time a flat surface in the bottom of the groove 23 that allows the inner surface of the transport element 1 to glide with low friction against the expansion body 6, which is particularly important for the case in which the transport element 1 is constituted by a cogged band with internally facing cogged teeth.

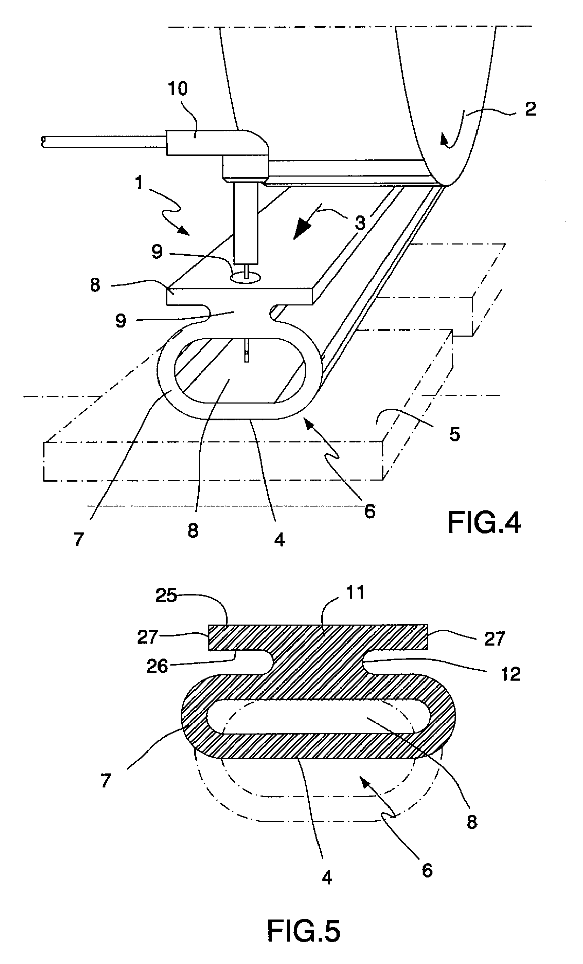

With reference to Figure 4, the present feed arrangement is shown in an alternative embodiment whereby the same reference numbers are used for essentially similar parts as in the first embodiment described above. The feed arrangement has an endless mobile transport element 1, which in this case is constituted by a band. An extended expansion body 6 is arranged at the transport element 1, which expansion body running continuously around the complete transport element comprises a membrane-shaped part 7 with a chamber 8, which can be placed in connection via a valve device 9 with a source 10 of pressure medium such that the chamber can be filled and the membrane-shaped part can in this way be held inflated with the aid of an internal pressure of a suitable medium and to shrink when the medium is evacuated from the chamber. Thus, this second embodiment differs from the first embodiment in that the expansion body 6 in this case has the form of a continuous part of the transport element 1. It is appropriate that the medium be constituted by pressurised air, but it is not limited to this. The expansion body 6 is essentially extended and arranged extending along the lower part 4, which is used for displacement of the items, of the transport element 1.

As is made clear by Figure 4, the feed arrangement comprises a transport element 1, which in this case is constituted by a band arranged to run in a circuit around at least two wheels, of which only one wheel 2 is shown in Figure 4. The direction of motion of the transport element is shown by the arrow 3. It should be understood that it is possible that the transport element 1 be constituted by a cogged band or similar, instead of a band, which is placed into cogged interaction with the wheel 2. It is intended that the transport element 1 using a peripheral outer surface of an active lower part 4 feed or remove from a neighbouring or crossing transporter (not shown in the drawings) an item 5 that is suggested by a dash-dot contour line. With reference to fig. 5 the expansion body 6 of the transport element 1 forms part of the transport element such that the unit that is in this way obtained demonstrates when seen in cross-section the form of an extended body produced as one piece by, for example, extrusion along a profile; this body being of an elastic material such as rubber. The said body comprises when passing from the circuit of the central part of the transport element 1 an inner solid essentially thickened base 11, an intermediate tapered web 12, and at the farthest extremity the above-mentioned membrane-shaped part 7. The said membrane-shaped part 7 in its inflated condition demonstrates a bulb-like form that is indicated with dash-dot contour lines in the said drawing.

The base 11 has an essentially flat-formed shape that demonstrates a rectangular cross-section with a first 25 and a second 26 flat side, whereby the said first flat side faces in towards the centre or the middle of the circuit of the transport element 1 and is intended to interact with the outer periphery of the wheel 2 or with similar support and guidance arrangements that it is intended that the transport element interact with in order to obtain its rotation. The long edges 27 of the base 11 that has a rectangular cross-section are narrow relative to the width defined by the two flat sides 25 and 26.

When viewed in cross-section, the second flat side 26 of the feed band, which flat side faces downwards, transitions into the tapered web 12 that extending vertically downwards towards the second flat side terminates in the membrane-formed part 7, demonstrating the form of a bulb. The membrane-shaped part 7 runs as an external tube-shaped element continuously along the circumference of the transport element 1. The chamber 8 can be accessed from outside with the aid of a valve device 9 located in the first 25 flat side of the base 11, and it can, as is shown in Figure 4 by filled with a suitable pressurised medium, preferably air, by means of a needle nozzle 10 inserted into the valve device. On the filling of the chamber 12, the bulb-like membrane can be caused to expand and take on the inflated cross-sectional profile that is suggested in Figure 5 by the dash-dot contour line. A universal pump of the type that is shown in Figure 4 with an arrangement for the transfer of air in the form of a handle and an extended needle can be used for inflation of the feed band through the valve device. The said valve device 9 is constituted by what is Known as a "air plug", throug which the needle is inserted. One of the great advantages of placing the valve device 9 on the side of the transport element 1 that faces the centre of the circuit is that it is there subjected to minimum load during operation.

One of the great advantages of the present feed arrangement is that the transport element through its interaction with the medium-filled membrane demonstrates the combination of a large compliance in height in the vertical direction and thus a large ability to adapt to various random deficiencies in the timber that is to be removed, while at the same time it can pass around the feed wheel and breaker wheel with very low resistance due to the flattening. A feed arrangement is obtained in this way that is easily driven while at the same time having a great ability to make contact with and remove items such as pieces of timber.

The present arrangement is not limited to what has been described above and shown in the drawings: it can be changed and modified in a number of different ways within the framework of the innovative concept specified in the attached patent claims.

## Claims

1. A feed arrangement consisting of an endless transport element (1) such as a belt of elastic, a cogged band, a chain or similar that is mobile along a circuit and arranged to remove items (5) during storage or transport, in particular timber such as planks or boards, from a first position to a second position through interaction with the item, **characterised in that** an expansion body 6 has been assigned to the transport element (1), which expansion body comprises a membrane-shaped part (7) with a chamber (8) that is filled with a medium, whereby the membrane-shaped part is placed into interaction with the transport element for its inflation during the removal of the item.

2. The feed arrangement according to claim 1, whereby the medium comprises a gas that is preferably constituted by air.

3. The feed arrangement according to claims 1-2, whereby the expansion body (6) is essentially extended and when viewed in cross-section demonstrates the form of a body that when passing from the centre of the circuit of the transport element comprises an inner solid, essentially thick base (11), an intermediate tapering web-shaped part (12) and at the farthest extent of the membrane-shaped part (7) demonstrating the form of a bulb.

4. The feed arrangement according to any one of claims 1-3, comprising a valve device (9) through which the chamber (8) can be accessed from the outside for the introduction of the medium into the chamber.

5. The feed arrangement according to claim 4, whereby the valve device (9) is so located that it faces in towards the centre of the circuit.

6. The feed arrangement according to any one of claims 1-5, whereby the expansion body (6) and the transport element (1) constitute separate parts where the expansion body is essentially extended and arranged within the circuit of the transport element (1).

7. The feed arrangement according to claim 3, whereby the expansion body (6) is attached through its thicker base (11) such that the membrane-shaped part (7) extends parallel along the inner surface of the transport element (1) that faces in towards the centre of the circuit.

8. The feed arrangement according to any one of claims 7-8, comprising an extended friction-reducing means (21) located between the expansion body (6) and the transport element (1).

9. The feed arrangement according to claim 8, whereby the friction-reducing means (21) has the form of a tape or plate and is attached at its end by means of holders (22) so designed that the friction-reducing means is offered a certain degree of compliance and the ability to move while in interaction with the expansion body.

10. The transport element according to claim 6, whereby the transport element (1) is guided by tracks relative to the expansion body (6) such that these parts are located in line, opposite each other.

11. The feed arrangement according to claim 10, whereby the transport (1) is guided in tracks through the influence of a groove (23) arranged between the friction-reducing means (21) and the transport element.

12. The feed arrangement according to claim 1, whereby the expansion body (6) forms a continuous integrated part of the transport element (1) and is arranged passing continuously around the complete transport element.
